# EUROPÄISCHE PATENTSCHRIFT

(11) **EP 0 828 090 B1**
(45) Veröffentlichungstag und Bekanntmachung des Hinweises auf die Patenterteilung: **27.03.2002**
(21) Anmeldenummer: 97110354.4
(22) Anmeldetag: 25.06.1997
(51) Int. Cl.: F16F 15/14, F16F 15/12

(54) **Drehzahladaptiver Tilger**
Rotational speed adaptive damper
Amortisseur adaptatif de vélocité rotative

(30) Priorität: 08.08.1996 DE 19631989
(43) Veröffentlichungstag der Anmeldung: 11.03.1998
(73) Patentinhaber: Carl Freudenberg KG, 69469 Weinheim (DE)
(72) Erfinder: Eckel, Hans-Gerd, Dr., 69514 Laudenbach (DE)

(56) Entgegenhaltungen:
- FR-A- 1 045 551
- GB-A- 444 222
- GB-A- 598 811
- US-A- 2 079 226
- US-A- 5 495 924

## Beschreibung

### Technisches Gebiet

Die Erfindung betrifft einen drehzahladaptiven Tilger zum Einbau in einen durch einen um einen Mittelpunkt M geschlagenen Außenradius Rₐ und einen Innenradius Rᵢ begrenzten Bauraum, umfassend einen um eine Rotationsachse drehbaren Nabenteil sowie eine Anzahl n über den Umfang verteilte und zu einer durch den Mittelpunkt M gehenden Symmetrieachse S symmetrischen Tilgermassen, die um von der Rotationsachse beabstandete Schwenkachsen der Rotationsbewegung folgend schwenkbar sind, wobei jede Tilgermasse durch zwei in Umfangsrichtung beabstandete, sich parallel zur Rotationsachse erstreckende Bolzen mit dem Durchmesser d in dem Nabenteil gelagert ist und wobei die Bolzen auf Kurvenbahnen mit dem Durchmesser D abrollbar sind, die im Bereich des Nabenteils ein U-förmig in Richtung der Rotationsachse und im Bereich der Tilgermassen ein U-förmig in die entgegengesetzte Richtung geöffnetes Profil haben, wodurch sich eine Pendellänge l = D-d ergibt, und wobei die Tilgermassen in zwei Richtungen um einen Pendelwinkel α ausgelenkt werden können.

### Stand der Technik

Ein solcher Tilger ist aus der GB PS 598811 bekannt. Die Kurvenbahnen werden dabei durch Teilbereiche der Wandung von Bohrungen gebildet, die einen erheblich größeren Durchmesser haben als die Bolzen. Bei Einleitung von Drehschwingungen in einen solchen Drehschwingungstilger wälzen sich die Bolzen auf den die Bohrungen begrenzenden Wandungen, die die Kurvenbahnen bilden, ab, was dazu führt, daß sich der Abstand zwischen einer jeden Trägheitsmasse und der Rotationsachse im Verlauf einer jeden Einzelschwingung ständig verändert. Ein solcher Tilger hat eine der Drehzahl proportionale Eigenfrequenz, so daß Drehschwingungen mit Frequenzen, die der Drehzahl proportional sind, im gesamten Drehzahlbereich tilgbar sind. Derartige der Drehzahl proportionale Frequenzen haben alle periodisch arbeitenden Maschinen, wie z.B. die Verbrennungsmotoren von Kraftfahrzeugen.

Bei drehzahladaptiven Tilgern ist die Tilgerwirkung dann am größten, wenn die Tilgermassen möglichst groß werden. Bei vorgegebenen Einbaumaßen, das sind der Innen- und der Außenradius sowie die zur Verfügung stehende Einbaubreite, ist die Festlegung der Umfangskontur der Tilgermasse von entscheidender Bedeutung. Bei der Festlegung der Umfangskontur muß den folgenden Betriebszuständen Rechnung getragen werden.

Bei sich gleichförmig drehender Welle umkreisen sämtliche Trägheitsmassen die Rotationsachse stets im größtmöglichen Abstand. Dieser Zustand wird jedoch gestört, wenn die Drehbewegung zum Erliegen kommt. Unter dem Einfluß der Gravitation verlagern sich dann sämtliche Teile hin zu einer Stelle, an der sie den kleinstmöglichen Abstand vom Erdmittelpunkt haben. Die in Umfangsrichtung des drehzahladaptiven Tilgers verteilten Trägheitsmassen und Bolzen haben somit in diesem Zustand Abstände von der Rotationsachse, die voneinander verschieden sind.

Bei drehzahladaptiven Tilgern, die sich gelegentlich in einer Drehbewegung und gelegentlich in einem ruhenden Zustand befinden, macht sich der Übergang vom drehenden in den ruhenden Zustand insofern unangenehm bemerkbar, als sich die gerade auf der vom Erdmittelpunkt abgewandten Seite der Rotationsachse befindlichen Tilgermassen plötzliche herabfallen, wobei die metallischen Tilgermassen auf die jeweils benachbarten aufschlagen. Dabei ergeben sich metallische Anschlaggeräusche. Der gleiche Effekt ist beim Einsetzen der Drehbewegung nach vorausgegangenem Stillstand zu beobachten.

Der Erfindung liegt die Aufgabe zugrunde, einen drehzahladaptiven Tilger der eingangs genannten Art derart weiterzuentwickeln, daß die Tilgermassen möglichst groß werden.

In einer weiteren Ausgestaltung wird darauf abgestellt, daß es am Anfang und am Ende einer Drehbewegung nicht mehr zu einer unzulässigen Geräuschbildung kommen soll.

### Darstellung der Erfindung

Diese Aufgabe wird erfindungsgemäß bei einem drehzahladaptiven Tilger der eingangs genannten Art dadurch gelöst, daß die Außenkontur der Tilgermasse in Form eines Kreisbogens Kₐ um einen auf einer durch den Mittelpunkt M gehenden Symmetrieachse S der Tilgermasse um die Pendellänge l nach außen versetzten Mittelpunkt Mₐ mit dem Radius rₐ = Rₐ - l - δₐ aufweist, wobei δₐ ein Konstruktionsabstand größer oder gleich Null ist.

Da die von der Mittelachse des Tilgers am weitest entfernten Massen die größte Auswirkung auf die Dämpfungswirkung des Tilgers haben, trägt die Festlegung der Außenkontur im besonderen Maße zur Lösung des Problems bei. Dabei wird der Außenradius des Bauraums zu keinem Zeitpunkt überschritten. Bei einem Konstruktionsabstand von Null ergibt sich vielmehr ein Gleitvorgang auf dem Außenradius, wobei wegen der endlichen Dicke der Tilgermassen eine Linienberührung erfolgt.

Dadurch, daß die Tilgermasse eine Innenkontur bestehend aus sich auf der Symmetrieachse S im Punkt Pᵢ treffenden zwei Kreisbögen Kᵢ mit dem Radius rᵢ = Rᵢ + δᵢ aufweist, wobei der Mittelpunkt Mᵢ jedes Kreisbogens Kᵢ auf einer zur Symmetrieachse S um den Abstand y = l•sin α parallel versetzten Gerade Gᵢ liegt und wobei δᵢ ein Konstruktionsabstand größer oder gleich Null ist, wird der Bauraum im Bereich des Innenradius besser ausgenutzt. Ohne Konstruktionsspiel sitzt die Tilgermasse auf der Mantelfläche des Nabenteils auf, wenn die Tilgermassen um den maximalen Pendelwinkel α ausgelenkt werden.

Dadurch, daß die Tilgermasse eine Seitenkontur mit einem Kreisbogen Kₛ mit dem Radius rₛ = l•sin β aufweist, wobei der Winkel β = 180°/n (n = Anzahl der Tilgermassen am Umfang) beträgt, daß sich der Kreisbogen Kₛ bis zu einem Berührungspunkt mit der Außenkontur der Tilgermasse erstreckt und daß der Kreisbogen Kₛ einen Mittelpunkt Mₛ aufweist, der zu einer Teilungsachse T, welche den Umfang der Nabe in n Segmente unterteilt, den Abstand x = rₛ + δₓ hat, wobei δₓ ein Konstruktionsabstand größer oder gleich Null ist, erlaubt es, daß sich die Tilgermassen über den gesamten Teilungswinkel erstrecken. Dies ist dann möglich, wenn die Tilgermassen eine zwangserregte, synchrone Bewegung vollführen.

Die Weiterbildung, daß die Seitenkontur der Tilgermasse einen sich an den Kreisbogen Kₛ anschließenden Kreisbogen Kₛ' mit demselben Radius rₛ aufweist, wobei die Kreisbögen Kₛ, Kₛ' an ihrem Berührungspunkt P_{S} eine gemeinsame Tangente besitzen und durch die Mittelpunkte Mₛ und Mₛ' eine Gerade (MₛMₛ') geht, welche in einem Winkel α zu der Senkrechten (T Mₛ) auf der Teilungsachse T durch den Mittelpunkt Mₛ steht, können sich die Tilgermassen beim Auslenken bis zum Pendelwinkel übereinanderschieben.

Die maximale Tilgermasse wird dann erreicht, wenn sich der Kreisbogen Kₛ' bis zu einem Schnittpunkt mit der Innenkontur erstreckt.

Um die Geräuschbildung zu vermeiden, ist die Seitenkontur der Tilgermassen mit einer elastischen Auflage zur Dämpfung der Berührung zweier benachbarter Tilgermassen versehen.

Um bei geringen Konstruktionsabständen das Aufeinandergleiten der Tilgermassen nicht zu behindern, kann die Auflage aus einem Werkstoff mit guten Gleiteigenschaften bestehen.

Zur Verbesserung der Dämpfungs- bzw. Gleiteigenschaften kann die Auflage mit einer federnden Lippe versehen sein.

Zur Vermeidung des Herabfallens der Tilgermassen und der Bolzen sind die Tilgermassen bzw. das Nabenteilzusätzlich mit Führungsbahnen für die Bolzen versehen. Diese Führungsbahnen können bei der Herstellung der Auflage miterzeugt werden.

Vorteilhafterweise ist die Auflage bzw. die Führungsbahn in ihrer Dicke derart bemessen, daß Fertigungstoleranzen ausgeglichen werden.

### Kurzbeschreibung der Zeichnung

Der Gegenstand der Erfindung wird nachfolgend anhand der Zeichnungen weiter verdeutlicht. Es zeigen:
- Fig. 1:: eine Bauform eines drehzahladaptiven Tilgers in einer Ansicht von vorn, die
- Fig. 2:: eine Tilgermasse mit einer Konstruktionsanleitung für die Umfangskontur, die
- Fig. 3:: ein Einsatzteil zum Einfügen in das Nabenteil bzw. die Tilgermassen des drehzahladaptiven Tilgers nach Figur 1, die
- Fig. 4:: zwei benachbarte Tilgermassen im Längsschnitt.

### Ausführung der Erfindung

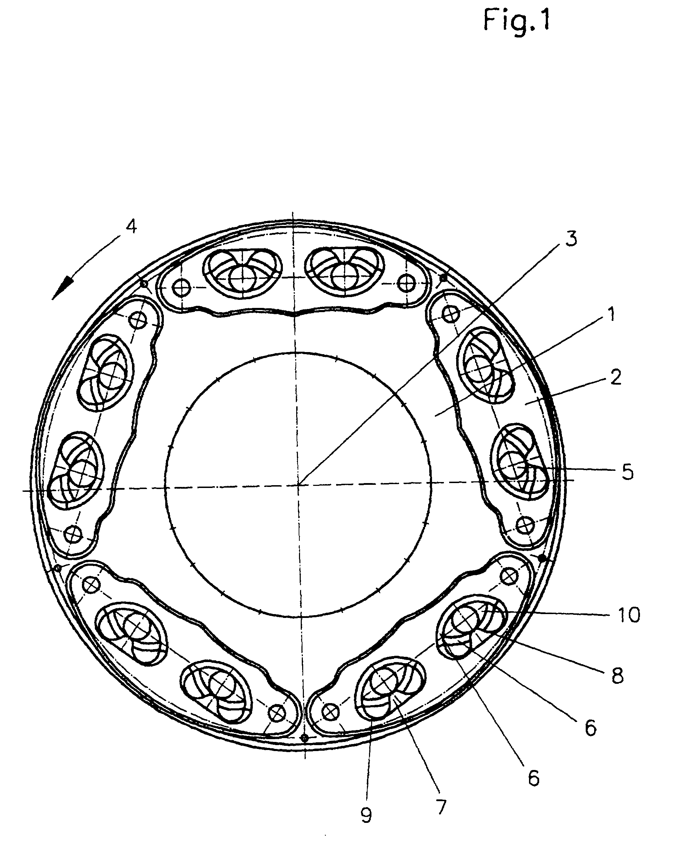

Der in Fig. 1 wiedergegebene drehzahladaptive Tilger umfaßt ein um eine Rotationsachse verdrehbares Nabenteil 1 sowie mehrere Trägheitsmassen 2, die um von der Rotationsachse 3 beabstandete Schwenkachsen der Rotationsbewegung 4 mehr oder weniger folgend schwenkbar sind, wobei jede Trägheitsmasse 2 durch zwei in Umfangsrichtung beabstandete, sich parallel zur Rotationsachse 3 erstreckende Bolzen 5 in dem Nabenteil gelagert ist und wobei die Bolzen 5 auf Kurvenbahnen 6 abrollbar sind, die im Bereich des Nabenteils 1 ein U-förmig in Richtung der Rotationsachse 3 und im Bereich der Trägheitsmassen 2 ein U-förmig in die entgegengesetzte Richtung geöffnetes Profil haben. Die Bolzen 5 werden auf den von den jeweiligen Kurvenbahnen 6 abgewandten Seiten durch eine Führungsbahn 7 geführt und in radialer Richtung abgestützt. Die Führungsbahn 7 besteht aus einer Führungsschicht 8 aus polymerem Werkstoff, beispielsweise aus Gummi. Die Führungsbahnen 7 sind beiderseits durch Anschlagflächen 9 begrenzt, die zugleich die Umfangsbeweglichkeit des jeweiligen Bolzens 5 auf einen festen Pendelwinkel α begrenzen. Der Durchmesser des Bolzens 5 ist so mit dem radialen Abstand zwischen der jeweiligen Kurvenbahn 6 und der zugehörigen Führungsbahn 7 abgestimmt, daß kein oder zumindest kein nennenswertes Spiel vorhanden ist.

Die Kurvenbahnen 6 und die Führungsbahnen 7 bilden Bestandteile von Einsatzteilen, die in Ausnehmungen 10 des Nabenteils 1 und der Trägheitsmassen 2 unverlierbar aufgenommen sind, beispielsweise im Rahmen eines Spritzprozesses.

Während des Betriebs bewegen sich die Tilgermassen 2 im wesentlichen synchron miteinander, wobei die Bolzen jeder Tilgermasse stets denselben Abstand zueinander haben. Erst bei Anhalten der Drehbewegung können nichtsynchrone Bewegungen auftreten. Die Tilgermassen 2 verfügen über eine optimierte Umfangskontur mit Umfangsspiel.

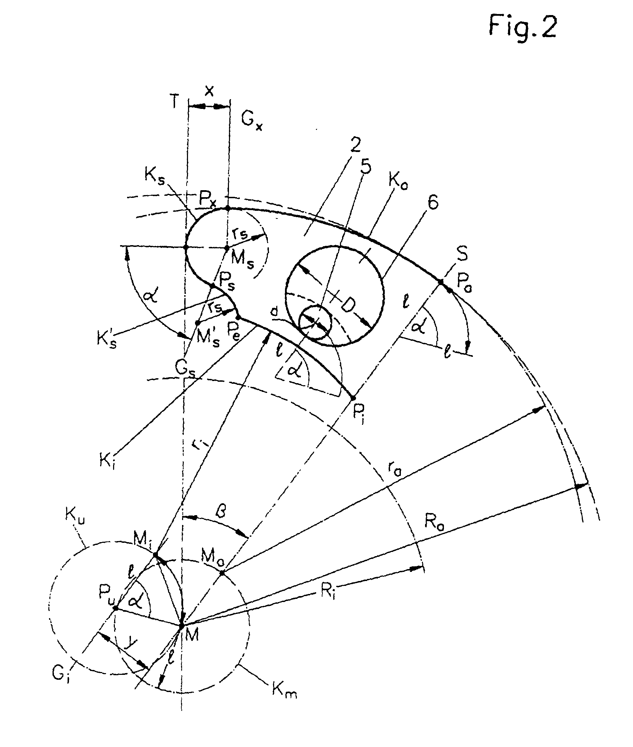

In Fig. 2 ist eine Tilgermasse 2 mit einer Umfangskontur gemäß der Erfindung sowie die dazugehörige konstruktive Bestimmung der Umfangskontur dargestellt. Ausgehend von einem Außenradius Rₐ und einem Innenradius Rᵢ mit dem gemeinsamen Mittelpunkt M wird der zur Verfügung stehende Bauraum bestimmt.

Vorgegeben ist weiterhin der Durchmesser D der Kurvenbahnen 6 in der Tilgermasse 2 und der Nabe 1 sowie der Durchmesser d des Bolzens 5, woraus sich eine Pendellänge l = D-d berechnen läßt. In der Regel ist es zweckmäßig, die Tilgerauslenkung, d.h. den Pendelwinkel α zu begrenzen, wobei in der Zeichnung von einem einem Pendelwinkel α = 70° als maximale Tilgerauslenkung ausgegangen wird.

Eine weitere Vorgabe besteht darin, daß die Anzahl n der über den Umfang verteilten Tilgermassen auf n = 5 festgelegt wurde. Ausgehend von einer Teilungsachse T, welche den Umfang der Nabe in hier n = 5 Segmente unterteilt, wird eine diese Segmente halbierende Symmetrieachse S durch den Mittelpunkt M unter einem Winkel von β = 180°/n angetragen.

Zur Bestimmung der Außenkontur Kₐ wird zunächst um den Mittelpunkt M ein Kreis Kₘ mit dem Radius l geschlagen. Die grundlegende Überlegung besteht darin, daß jeder beliebige Punkt, also auch Kreismittelpunkte eines auf der Tilgermasse 2 befindlichen Kreises auf einer Kreisbahn mit dem Radius l läuft.

Jeder Punkt der Tilgermasse 2, also auch der Schnittpunkt Pₐ der Symmetrieachse S mit dem Außenradius Rₐ bewegt sich auf einer Kreisbahn mit dem Radius l bis zum Pendelwinkel α. Aus dieser Überlegung heraus ergibt sich, daß der Punkt Pₐ Bestandteil der optimalen Außenkontur ist. Der weitere Verlauf der optimalen Außenkontur ergibt sich, indem um den Schnittpunkt zwischen der Symmetrieachse S und dem Kreis Kₘ als Mittelpunkt Mₐ ein Kreisbogen Kₐ mit dem Radius rₐ = Rₐ - l geschlagen wird.

Zur Bestimmung er Innenkontur wird wie folgt vorgegangen: Parallel zu der Symmetrieachse S wird in dem Abstand y = l•cos α eine Gerade Gᵢ angetragen, welche den Kreisbogen Kₘ in zwei Punkten schneidet. Dabei schließt die durch den unteren der beiden Schnittpunkte Pᵤ und den Kreismittelpunkt M gebildete Strecke (Pᵤ M) der Länge l mit der Geraden Gᵢ genau den Pendelwinkel α ein. Durch Schlagen eines Kreisbogens Kᵤ mit dem Radius l um den unteren Schnittpunkt Pᵤ ergibt sich als Schnittpunkt der Geraden Gᵢ in der der Tilgermasse 2 zugewandten Richtung der Mittelpunkt Mᵢ. Dieser Mittelpunkt Mᵢ bewegt sich relativ zur Tilgermasse 2 auf der Kreisbahn Kᵤ um den Pendelwinkel α bis zum Mittelpunkt M und zurück. An den Mittelpunkt Mᵢ wird ein Kreisbogen Kᵢ mit dem Radius rᵢ = Rᵢ + δᵢ angetragen. Der Schnittpunkt des Kreisbogens Kᵢ mit der Symmetrieachse S legt den Punkt Pᵢ fest, an welchem der Kreisbogen Kᵢ durch einen zu der Symmetrieachse S symmetrischen Kreisbogen fortgeführt wird. Die Innenkontur Kᵢ stimmt in der nicht dargestellten zweiten Endlage mit dem Innenradius Rᵢ des Bauraums überein und hat in der Endlage somit den Abstand δᵢ, der hier Null ist.

Die Seitenkontur der Tilgermasse 2 ist dadurch bestimmt, daß von der Teilungsachse T eine Gerade Gₓ im Abstand x = l•sin β, wobei der Winkel β = 180°/n beträgt, in die Tilgermasse 2 hinein aufgetragen wird. Der Schnittpunkt Pₓ mit dem Kreisbogen Kₐ der Außenkontur legt das Ende der Außenkontur und den Beginn der Seitenkontur fest. Auf der Geraden Gₓ liegt ein Mittelpunkt Mₛ eines Kreisbogens Kₛ mit dem Radius rₛ = x - δₓ der Seitenkontur, wobei der Mittelpunkt Mₛ zum Schnittpunkt Pₓ ebenfalls den Abstand rₛ aufweist. Um den Mittelpunkt Mₛ wird von dem Schnittpunkt Pₓ ausgehend der Kreisbogen Kₛ mit dem Radius rₛ aufgetragen, bis der Winkel 90° + α erreicht ist. Dieser Punkt Pₛ ist ein Wendepunkt in der Krümmung der Seitenkontur, welche mit demselben Radius rₛ, eventuell vergrößert um ein Spiel δₓ, um den auf der durch den Punkt Pₛ und den Mittelpunkt Mₛ gehenden Gerade Gₛ liegenden Mittelpunkt Mₛ' geschlagen ist und bis zum Schnittpunkt Pₑ mit dem Kreisbogen Kᵢ der Innenkontur fortsetzt.

Hierbei ist festzustellen, daß für die Seitenkontur der Kreisbogen Kₛ' aus Gründen der Fertigung bis zum Erreichen der Innenkontur auch einen anderen Verlauf nehmen kann, beispielsweise kann ein weiterer Kreisbogen mit dem Radius rₛ angesetzt werden, sobald ein gewisses Bogenmaß von Kₛ' überschritten ist. Die Ausrundung ist aber letztlich beliebig.

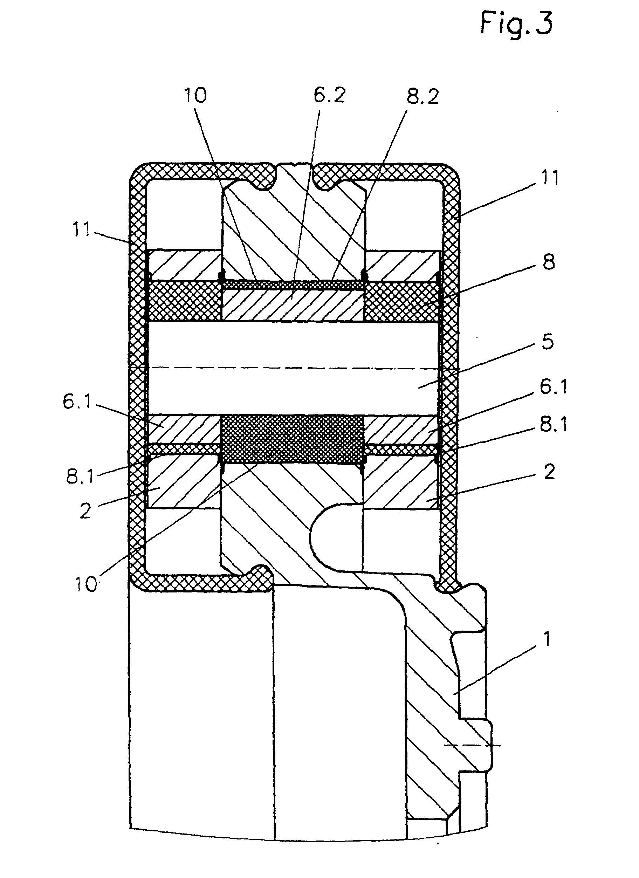

Die die Kurvenbahnen 6 bildenden Einsatzstücke 6.1, 6.2 können auch lose in die Ausnehmungen 10 eingefügt und durch nachträgliches Einformen der die Führungsbahnen 7 tragenden Dämpfungsschichten 8 mit den Ausnehmungen 10 und den Einsatzstücken 6.1 verklebt sein (Fig. 3). Dabei ergibt sich nicht nur ein wackelsicherer, spielfreier Sitz der Einsatzstücke 6.1 sondern darüber hinaus eine absolut präzise Zuordnung der Kurven- und Führungsbahnen 6,7 zu den Trägheitsmassen 2 bzw. zu der Rotationsachse des Nabenteils 1. Dem Auftreten von unerwünschten Unwuchterscheinungen während der Rotation des Tilgers läßt sich dadurch begegnen. Als besonders zweckmäßig hat es sich erwiesen, wenn die Einsatzstücke 6.1, 6.2 durch Strangpressen erzeugt sind. Sie verfügen hierdurch über eine ausgezeichnete Oberflächenqualität. Die Ausnehmungen können demgegenüber durch einen Stanzprozeß erzeugt sein. Die dabei zu beobachtenden Oberflächenungenauigkeiten werden beim Einformen des die Dämpfungsschichten 8 bildenden Werkstoffkörpers selbsttätig ausgeglichen.

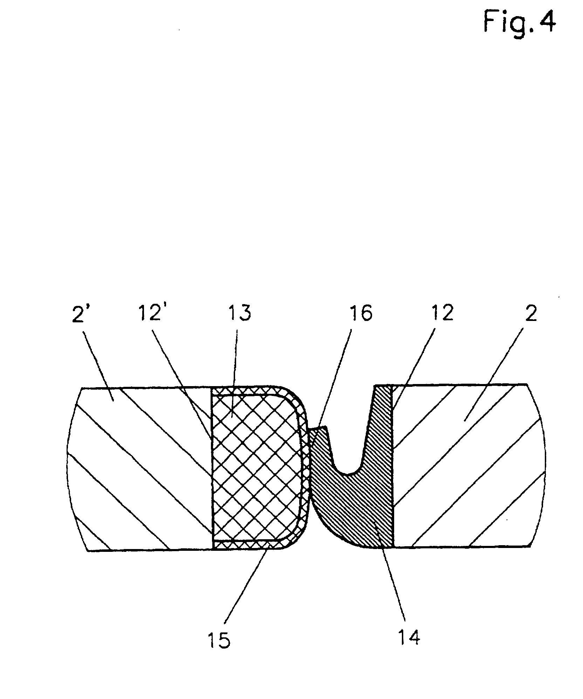

In Fig. 4 ist ein Schnitt durch zwei benachbarte Tilgermassen 2,2' dargestellt. Die Umfangskontur 12 bzw. 12' ist mit einer Auflage 13, 14 versehen. Diese Auflagen 13, 14 bestehen aus einem polymeren Werkstoff, beispielsweise aus Polyurethan oder Polyamid oder einem elastomeren Werkstoff, wobei die Auflage 13 einen Überzug 15 aus einem Werkstoff mit guten Gleiteigenschaften aufweist. Die Auflage 14 ist mit einer Lippe 16 versehen, welche unter Vorspannung an der Auflage 13 anliegt oder aber einen definierten Abstand zur Auflage 13 aufweisen kann. Die Variationsmöglichkeit des Werkstoffs der Auflagen 13, 14 in bezug auf eine gewünschte Dämpfung bei gewünschten Gleiteigenschaften ist vielfälitig und erschöpft sich nicht in dem dargestellten Beispiel.

Bei dem gezeigten Ausführungsbeispiel wird das Nabenteil 1 im Bereich seines Außenumfangs durch einen Flansch gebildet, dem die Trägheitsmassen 2 in axialer Richtung beiderseits benachbart sind. Die Bolzen 5 sind von zylindrischer Gestalt. Sie können bedarfsweise durch Rohre gebildet sein. Um ein Herausfallen in axialer Richtung zu verhindern, sind Kappen 11 aus Kunststoff vorgesehen, die unverrückbar an dem Nabenteil 1 festgelegt sind und die Bolzen 5 im Bereich der beiden Enden überdecken. In dem verbleibenden Freiraum 12 sind zugleich die Trägheitsmassen 2 aufgenommen. Sie werden neben den Bolzen 5 durch die Kappen 11 daran gehindert, eine bezogen auf Fig. 3, abweichende Zuordnung zu dem Nabenteil 1 in axialer Richtung einzunehmen. Die Kappen 11 können auch aus Metall bestehen.

Die sich während der bestimmungsgemäßen Verwendung des gezeigten drehzahladaptiven Tilgers ergebende Funktion besteht darin, daß sich eine Abwälzbewegung der Bolzen 5 auf den Kurvenbahnen 6 ergibt mit der Folge, daß sich der radiale Abstand zwischen den Trägheitsmassen 2 und der Rotationsachse 3 stetig verändert. Die Folge ist eine Tilgerwirkung, die im gesamten Drehzahlbereich verfügbar ist.

Die Bolzen 5 werden durch die Führungsbahnen 7 auf der von den Kurvenbahnen 6 abgewandten Seite nach Überwindung eines geringen Spiels bereits abgestützt, bevor sich eine große Relativgeschwindigkeit ergibt. Das Auftreten von Anschlaggeräuschen läßt sich dadurch unter allen in Frage kommenden Betriebsbedingungen auf akzeptable Werte begrenzen.

Um die Sicherheit gegen betriebsbedingte Anschlaggeräusche noch weiter zu verbessern, bestehen die Auflagen 13 - 15 und Führungsbahnen 7 aus polymerem Werkstoff, beispielsweise aus Polyurethan oder Polyamid.

Es ist auch möglich, einen elastomeren Werkstoff mit einem Überzug aus einem Werkstoff mit guten Gleiteigenschaften zu verwenden. Durch die elastischen Eigenschaften resultiert bei einer solchen Ausbildung eine besonders hochgradige Dämpfung von Anschlaggeräuschen.

Die Dämpfungsschichten 8 enden in Umfangsrichtung beiderseits in Anschlagflächen 9, durch die der Pendelwinkel α der Tilgermassen 2 auf einen festen auf einen festen Wert begrenzt ist. Die resultierende Öffnung 10, in der ein jeder Bolzen beweglich ist, ist von nierenförmigem Umriß. Sie wird in einem ersten Teilbereich durch die Kurvenbahnen 6 begrenzt, auf der die Bolzen 5 abrollbar sind, in einem zweiten Teilbereich durch die Führungsbahnen 7, durch die die Bolzen 5 beim Nichtdrehen des Drehschwingungstilgers abstützbar sind und in Umfangsrichtung beiderseits durch die Anschlagflächen 9, die die Umfangsbeweglichkeit des Bolzens 5 begrenzen. Sämtliche Teilflächen gehen idealerweise unter Vermeidung von sprunghaften Richtungsänderungen kontinuierlich ineinander über.

Die Kurvenbahnen 6 und die Führungsbahnen 7 können Bestandteile von Einsatzteilen bilden, die in Ausnehmungen 10 des Nabenteils 1 und/oder der Trägheitsmassen 2 einclipsbar sind. Sie können hinsichtlich der Größe und Dimensionierung in Abhängigkeit von dem jeweiligen Anwendungsfall modifiziert sein und lassen es zu, den jeweiligen Tilger einem bestimmten Anwendungsfall in gezielter Weise anzupassen. Die Montage kann durch einfaches Einstecken in die Ausnehmungen erfolgen und die zusätzliche Verwendung von Klebstoffen, Verschraubungen und/oder Nieten einbeziehen.

Es hat sich als besonders vorteilhaft bewährt, wenn die Dämpfungsschicht 8 durch unmittelbares Anformen und Verfestigen des sie bildenden Werkstoffkörpers mit den die Kurvenbahnen 6 tragenden Einsatzstücken und Ausnehmungen 10 verbunden ist. Dabei ergibt sich der sekundäre Vorteil einer gegenseitigen Verklebung, eines Toleranzausgleichs zwischen den Einsatzstücken und den Ausnehmungen sowie eine wackelsichere Festlegung der Einsatzstücke in den Ausnehmungen. Die Einbringung und Verfestigung des die Dämpfungsschicht 8 bildenden Werkstoffkörpers kann beispielsweise im Zuge eines Spritzprozesses erfolgen.

Dabei kann bei demselben Spritzprozeß zur Aufbringung der Dämpfungsschicht 8 auch die Auflage 13, 14 aufgebracht werden.

## Patentansprüche

1. Drehzahladaptiver Tilger zum Einbau in einen durch einen um einen Mittelpunkt M geschlagenen Außenradius Rₐ und einen Innenradius Rᵢ begrenzten Bauraum, umfassend einen um eine Rotationsachse drehbaren Nabenteil (1) sowie eine Anzahl n über den Umfang verteilte und zu einer durch den Mittelpunkt M gehenden Symmetrieachse S symmetrischen Tilgermassen (2), die um von der Rotationsachse (3) beabstandete Schwenkachsen der Rotationsbewegung (4) folgend schwenkbar sind, wobei jede Tilgermasse (2) durch zwei in Umfangsrichtung beabstandete, sich parallel zur Rotationsachse (3) erstreckende Bolzen (5) mit dem Durchmesser d in dem Nabenteil (1) gelagert ist und wobei die Bolzen (5) auf Kurvenbahnen (6) mit dem Durchmesser D abrollbar sind, die im Bereich des Nabenteils (1) ein U-förmig in Richtung der -Rotationsachse (3) und im Bereich der Tilgermassen (2) ein U-förmig in die entgegengesetzte Richtung geöffnetes Profil haben, wodurch sich eine Pendellänge l = D-d ergibt, und wobei die Tilgermassen (2) in zwei Richtungen um einen Pendelwinkel α ausgelenkt werden können, **dadurch gekennzeichnet, daß** die Außenkontur der Tilgermasse in Form eines Kreisbogens Kₐ um einen auf einer durch den Mittelpunkt M gehenden Symmetrieachse S der Tilgermasse (2) um die Pendellänge l nach außen versetzten Mittelpunkt Mₐ mit dem Radius rₐ = Rₐ - l - δₐ aufweist, wobei δₐ ein Konstruktionsabstand größer oder gleich Null ist.

2. Tilger gemäß dem Oberbegriff des Anspruchs 1, **dadurch gekennzeichnet, daß** die Tilgermasse (2) eine Innenkontur bestehend aus zwei sich auf der Symmetrieachse S in einem Punkt Pᵢ treffenden Kreisbögen Kᵢ mit dem Radius rᵢ = Rᵢ + δᵢ aufweist wobei der Mittelpunkt Mᵢ jedes Kreisbogens Kᵢ auf einer zur Symmetrieachse S um den Abstand y = l•sin α parallel versetzten Gerade Gᵢ liegt und wobei δᵢ ein Konstruktionsabstand größer oder gleich Null ist.

3. Tilger gemäß dem Oberbegriff des Anspruchs 1, **dadurch gekennzeichnet, daß** die Tilgermasse eine Seitenkontur mit einem Kreisbogen Kₛ mit dem Radius rₛ = l•sin β - δₓ aufweist, wobei der Winkel β = 180°/n beträgt, daß sich der Kreisbogen Kₛ bis zu einem Berührungspunkt mit der Außenkontur erstreckt und daß der Kreisbogen Kₛ einen Mittelpunkt Mₛ aufweist, der zu einer Teilungsachse T, welche den Umfang der Nabe in n Segmente unterteilt, den Abstand x = rₛ hat, wobei δₓ ein Konstruktionsabstand größer oder gleich Null ist.

4. Tilger nach Anspruch 1 und 2, beziehungsweise nach Anspruch 1 und 3, beziehungsweise nach Anspruch 2 und 3 beziehungsweise nach Anspruch 1 bis 3.

5. Tilger nach Anspruch 3 oder 4, **dadurch gekennzeichnet, daß** die Seitenkontur der Tilgermasse einen sich an den Kreisbogen Kₛ anschließenden Kreisbogen Kₛ' mit demselben Radius rₛ aufweist, wobei die Kreisbögen Kₛ und Kₛ' an ihrem Berührungspunkt P_{S} eine gemeinsame Tangente besitzen und wobei durch die Mittelpunkte Mₛ und Mₛ' eine Gerade (MₛMₛ') geht, welche in einem Winkel α zu der Senkrechten (T Mₛ) auf der Teilungsachse T durch den Mittelpunkt Mₛ steht.

6. Tilger nach Anspruch 5, **dadurch gekennzeichnet, daß** sich der Kreisbogen Kₛ' bis zu einem Schnittpunkt Pₑ mit der Innenkontur erstreckt.

7. Tilger nach einem der Ansprüche 1 bis 6, **dadurch gekennzeichnet, daß** die Umfangskontur der Tilgermassen (2) zumindest teilweise mit einer elastischen Auflage (13, 14) und/oder mit einer Auflage (15) aus einem Werkstoff mit guten Gleiteigenschaften versehen ist.

8. Tilger nach Anspruch 7, **dadurch gekennzeichnet, daß** die Auflage (14) eine federnde Lippe (16) aufweist.

9. Tilger nach einem der Ansprüche 7 bis 8, **dadurch gekennzeichnet, daß** die Tilgermasse (2) und das Nabenteil zusätzlich mit Führungsbahnen für die Bolzen versehen sind.

10. Tilger nach einem der Ansprüche 7 bis 9, **dadurch gekennzeichnet, daß** die Dicke der Auflage (13 bis 15) und/oder der Führungsbahn (7) und/oder die Dicke der Dämpfungsschicht (8) derart bemessen ist, daß Fertigungstoleranzen ausgeglichen werden.

## Claims

1. A speed-adaptive absorber for installation in an installation space bounded by an outer radius Rₐ drawn around a centre M and by an inner radius Rᵢ, comprising a hub part (1), which can be rotated about an axis of rotation, and a number n of absorber masses (2), which are distributed around the circumference, are symmetrical with respect to an axis S of symmetry passing through the centre M and can be pivoted about pivoting axes spaced apart from the axis (3) of rotation, following the rotary motion (4), each absorber mass (2) being supported in the hub part (1) by two pins (5) of diameter d spaced apart in the circumferential direction and extending parallel to the axis (3) of rotation, and the pins (5) being capable of being rolled along curved tracks (6) of diameter D, which have a profile that is open in a U shape in the direction of the axis (3) of rotation in the region of the hub part (1) and is open in a U shape in the opposite direction in the region of the absorber masses (2), resulting in a swing length l = D-d, and it being possible for the absorber masses (2) to be deflected in two directions by a swing angle α, **characterized in that** the outer contour of the absorber mass in the form of a circular arc Kₐ has about a centre Mₐ that is offset outwards by the swing length l on an axis S of symmetry of the absorber mass (2), the said axis passing through the centre M, and has the radius rₐ = Rₐ - l- δₐ, δₐ being a design spacing greater than or equal to zero.

2. An absorber according to the precharacterizing clause of claim 1, **characterized in that** the absorber mass (2) has an inner contour composed of two circular arcs Kᵢ that meet at a point Pᵢ on the axis S of symmetry and have the radius rᵢ = Rᵢ + δᵢ, the centre Mᵢ of each circular arc Kᵢ lying on a straight line Gᵢ that is offset parallel to the axis S of symmetry by the distance y = l•sin α, and δᵢ being a design spacing greater than or equal to zero.

3. An absorber according to the precharacterizing clause of claim 1, **characterized in that** the absorber mass has a lateral contour with a circular arc Kₛ having the radius rₛ = l•sin β - δₓ, the angle β being equal to 180°/n, **in that** the circular arc Kₛ extends as far as a point of contact with the outer contour, and **in that** the circular arc Kₛ has a centre Mₛ which is at a distance x = rₛ from a dividing axis T that divides the circumference of the hub into n segments, δₓ being a design spacing greater than or equal to zero.

4. An absorber according to claims 1 and 2, or according to claims 1 and 3, or according to claims 2 and 3 or according to claims 1 to 3.

5. An absorber according to either of claims 3 and 4, **characterized in that** the lateral contour of the absorber mass has a circular arc Kₛ' that adjoins the circular arc Kₛ and has the same radius rₛ, the circular arcs Kₛ and Kₛ' having a common tangent at their point of contact Pₛ and a straight line (MₛMₛ'), passing through the centres Mₛ and Mₛ', which is at an angle α to the perpendicular (T Mₛ) to the dividing axis T through the centre Mₛ.

6. An absorber according to claim 5, **characterized in that** the circular arc Kₛ' extends as far as a point Pₑ of intersection with the inner contour.

7. An absorber according to any one of claims 1 to 6, **characterized in that** the peripheral contour of the absorber masses (2) is provided at least partially with a flexible covering (13, 14) and/or with a covering (15) made from a material with good anti-friction properties.

8. An absorber according to claim 7, **characterized in that** the covering (14) has a flexible lip (16).

9. An absorber according to either of claims 7 and 8, **characterized in that** the absorber mass (2) and the hub part are additionally provided with guide tracks for the pins.

10. An absorber according to any one of claims 7 to 9, **characterized in that** the thickness of the covering (13 to 15) and/or of the guide track (7) and/or the thickness of the damping layer (8) is/are dimensioned in such a way that manufacturing tolerances are compensated for.

## Revendications

1. Amortisseur adaptatif de vitesse de rotation destiné à être monté dans un espace de construction limité par un rayon extérieur Rₐ tracé autour d'un point central M et par un rayon intérieur Rᵢ, comprenant une partie de moyeu (1) pouvant tourner autour d'un axe de rotation, ainsi qu'un nombre n de masses d'amortissement (2) réparties sur la circonférence et symétriques par rapport à un axe de symétrie S passant par le point central M, lesquelles masses d'amortissement (2) peuvent pivoter autour d'axes de pivotement situés à distance de l'axe de rotation (3) en suivant le mouvement de rotation (4), chaque masse d'amortissement (2) étant montée dans la partie de moyeu (1) au moyen de deux axes (5) de diamètre d situés à une distance l'un de l'autre dans la direction circonférentielle et s'étendant parallèlement à l'axe de rotation (3), et les axes (5) pouvant rouler sur des trajectoires curvilignes (6) de diamètre D qui présentent, dans la zone de la partie de moyeu (1), un profil en forme de U ouvert en direction de l'axe de rotation (3) et, dans la zone des masses d'amortissement (2), un profil en forme de U ouvert dans la direction opposée, grâce à quoi on obtient une longueur d'oscillation I = D-d, et les masses d'amortissement (2) pouvant être déviées dans deux directions suivant un angle d'oscillation α, **caractérisé en ce que** le contour extérieur de la masse d'amortissement se présente sous la forme d'un arc de cercle Kₐ de rayon rₐ = Rₐ - I - δₐ autour d'un point central Mₐ décalé vers l'extérieur de la longueur d'oscillation I sur un axe de symétrie S de la masse d'amortissement (2) passant par le point central M, δₐ étant une distance de construction supérieure ou égale à zéro.

2. Amortisseur selon le préambule de la revendication 1, **caractérisé en ce que** la masse d'amortissement (2) est pourvue d'un contour intérieur formé par deux arcs de cercle Kᵢ de rayon rᵢ = Rᵢ + δᵢ qui se rencontrent sur l'axe de symétrie S en un point Pᵢ, le point central Mᵢ de chaque arc de cercle Kᵢ se trouvant sur une droite Gᵢ parallèle à l'axe de symétrie S et décalée par rapport à celui-ci de la distance y = l•sin α et δᵢ étant une distance de construction supérieure ou égale à zéro.

3. Amortisseur selon le préambule de la revendication 1, **caractérisé en ce que** la masse d'amortissement est pourvue d'un contour latéral comprenant un arc de cercle Kₛ de rayon rₛ = l•sin β - δₓ, l'angle β mesurant 180°/n, **en ce que** l'arc de cercle Kₛ s'étend jusqu'à un point de contact avec le contour extérieur et **en ce que** l'arc de cercle Kₛ est pourvu d'un point central Mₛ situé à la distance x = rₛ d'un axe de division T qui divise la circonférence du moyeu en n segments, δₓ étant une distance de construction supérieure ou égale à zéro.

4. Amortisseur selon les revendications 1 et 2, respectivement selon les revendications 1 et 3, respectivement selon les revendications 2 et 3, respectivement selon la revendication 1 à 3.

5. Amortisseur selon la revendication 3 ou 4, **caractérisé en ce que** le contour latéral de la masse d'amortissement comprend un arc de cercle Kₛ' contigu à l'arc de cercle Kₛ et de rayon rₛ identique, les arcs de cercle Kₛ et Kₛ' possédant une tangente commune au niveau de leur point de contact Pₛ, et une droite (MₛMₛ') passant par les centres Mₛ et Mₛ', laquelle droite présente un angle α par rapport à la perpendiculaire (T Mₛ) à l'axe de division T passant par le point central Mₛ.

6. Amortisseur selon la revendication 5, **caractérisé en ce que** l'arc de cercle Kₛ' s'étend jusqu'à un point d'intersection Pₑ avec le contour intérieur.

7. Amortisseur selon l'une des revendications 1 à 6, **caractérisé en ce que** le contour circonférentiel des masses d'amortissement (2) est pourvu, au moins partiellement, d'un revêtement élastique (13, 14) et/ou d'un revêtement (15) fait d'un matériau possédant de bonnes propriétés de glissement.

8. Amortisseur selon la revendication 7, **caractérisé en ce que** le revêtement (14) est pourvu d'une lèvre élastique (16).

9. Amortisseur selon l'une des revendications 7 à 8, **caractérisé en ce que** la masse d'amortissement (2) et la partie de moyeu sont pourvues, en plus, de glissières de guidage pour les axes.

10. Amortisseur selon l'une des revendications 7 à 9, **caractérisé en ce que** l'épaisseur du revêtement (13 à 15) et /ou de la glissière de guidage (7) et/ou l'épaisseur de la couche d'amortissement (8) sont dimensionnées de manière à compenser les tolérances de fabrication.
